# FASCICULE DE BREVET EUROPEEN

(11) **EP 3 051 674 B1**
(45) Date de publication et mention de la délivrance du brevet: **27.11.2024**
(21) Numéro de dépôt: 15305088.5
(22) Date de dépôt: 27.01.2015
(51) Int. Cl.: H02K 3/48, H02K 17/20

(54) **ROTOR À CAGE D'ÉCUREUIL POUR UN MOTEUR ASYNCHRONE**
KURZSCHLUSSLÄUFER FÜR EINEN ASYNCHRONMOTOR
SQUIRREL-CAGE ROTOR FOR AN ASYNCHRONOUS MOTOR

(43) Date de publication de la demande: 03.08.2016
(73) Titulaire: GE Energy Power Conversion Technology Ltd, Rugby, Warwickshire CV21 1BD (GB)
(72) Inventeur: Billaud, Antoine, 88130 Floremont (FR); Mauffrey, Thibaut, 74000 Annecy (FR)
(74) Mandataire: Casalonga

(56) Documents cités:
- EP-A1- 0 608 675
- EP-A1- 2 615 726
- WO-A2-2010/100214
- DE-A1- 1 488 684
- DE-C1- 19 542 962
- FR-A1- 2 950 751

## Description

La présente invention se rapporte à un rotor de moteur électrique de grande puissance destiné à fonctionner à des vitesses de rotation particulièrement élevées. En particulier, l'invention s'applique aux moteurs asynchrones aptes à fonctionner à des vitesses périphériques élevées typiquement à partir de 100 m.s⁻¹, moteurs notamment destinés aux applications gazières, pétrolières, qu'elles soient sur terre, en mer, ou encore sous-marine.

La vitesse périphérique est la vitesse tangentielle calculée au niveau du diamètre extérieur du rotor de rotation.

Les moteurs électriques de forte puissance apte à fonctionner à des vitesses de rotations élevées trouvent de nombreuses applications. La fabrication de moteurs répondant à des exigences grandissantes en matière de puissance et de vitesse impose de nouvelles contraintes, notamment mécaniques, au niveau du rotor desdits moteurs. Les documents de brevet EP 0 608 675 A1 et US 5,512,792 décrivent des exemples de réalisation particulièrement efficaces de rotor pour moteurs asynchrones électriques, fonctionnant à une puissance et à des vitesses élevées. Il est ainsi décrit un rotor dont les barres constituant la cage d'écureuil peuvent librement se dilater, permettant ainsi d'atténuer les effets dus aux balourds thermiques.

Néanmoins, afin d'accroître encore la puissance reçue par ce type de moteur, l'augmentation du diamètre des barres constituant la cage d'écureuil s'avère nécessaire pour éviter l'échauffement excessif de ces dernières. Or, sur la base des exemples décrits dans les brevets cités précédemment, l'augmentation des sections desdites barres se traduit par une réduction des distances entre ces mêmes barres. Cette solution s'avère donc peu satisfaisante puisque la réduction de l'espacement entre chaque barre introduit de nouvelles contraintes magnétiques et mécaniques, ce qui aboutit, in fine, à fragiliser le rotor.

Le document de brevet FR 2 950 751 propose un rotor apte à être intégré dans un moteur électrique aux caractéristiques améliorées en termes de puissance supportée et de vitesse périphériques de rotation, notamment par sa capacité à véhiculer une plus grande puissance électrique au travers de la cage d'écureuil du rotor. Pour ce faire le rotor comporte une pluralité de conducteur électrique, chaque conducteur étant formé par l'assemblage d'une barre principale et d'une barre secondaire présentant respectivement une section sensiblement circulaire et traversant la masse magnétique du rotor par l'intermédiaire d'une encoche. La forme et la disposition de chaque encoche sont définies de manière à assurer un contact entre la barre principale et la barre secondaire suffisant pour permettre le passage d'un courant électrique lorsque le rotor est en rotation.

Cependant, un tel assemblage conduit à des difficultés de mise en oeuvre. En particulier, tant que la température de fonctionnement n'est pas stabilisée, des déformations différentielles entre la barre principale et la barre secondaire conduisent, d'une part, à l'existence d'un balourd et, d'autre part, à un mauvais contact électrique entre la barre principale et la basse secondaire.

Le document DE 1488684 divulgue un rotor à cage d'écureuil comprenant des barres uniques possédant sur la totalité de leur longueur une section trapézoïdale formant un trapèze isocèle et dans lequel la petite base de chaque barre étant disposée radialement vers l'extérieur par rapport à l'axe du rotor.

L'invention a donc pour but de palier à ces problèmes en proposant un rotor amélioré.

La présente invention a notamment pour objet un rotor pour moteur électrique selon la revendication 1.

Suivant des modes particuliers de réalisation, le rotor comporte l'une ou plusieurs des caractéristiques suivantes :
- chaque barre est venue de matière et est réalisée en cuivre ou en un alliage de cuivre ;
- la section de chaque barre est sensiblement constante selon l'axe du rotor.

L'invention a également pour objet un moteur apte à entraîner le rotor tel que défini ci-dessus à une vitesse périphérique supérieure ou égale à 100 m.s-1 au niveau du diamètre extérieur de la masse magnétique.

La présente invention a encore pour avantage qu'elle permet d'améliorer significativement la puissance supportée par des moteurs tels que ceux décrit dans les documents de brevet EP 0 608 675 et US 5,512,792 sans engendrer de changement profond de la structure des rotors existants.

D'autres caractéristiques et avantages de la présente invention apparaîtront plus clairement à la lecture de la description qui suit, d'un exemple de réalisation particulier, donné à titre illustratif et nullement limitatif, et faite en se référant aux figures annexées qui représentent :
- la figure 1, une demi-coupe longitudinale d'un rotor ;
- la figure 2, une vue agrandie d'une coupe transversale du rotor de la figure 1 au voisinage d'une encoche ;
- la figure 3, une coupe transversale d'un premier mode de réalisation du rotor au niveau de la masse magnétique de celui-ci ; et,
- la figure 4, une coupe transversale d'un second mode de réalisation du rotor au niveau de la masse magnétique de celui-ci.

Le rotor selon l'invention trouve pour application les moteurs aptes à fonctionner à des vitesses périphériques élevées typiquement à partir de 100 m.s⁻¹. Le rotor selon l'invention est en particulier adapté à être utilisé au sein de moteurs électriques asynchrones, notamment destinés aux applications gazières, pétrolières, qu'elles soient sur terre, en mer, ou encore sous-marines. De façon conventionnelle dans la présente demande, l'expression « sensiblement égal à » exprimera une relation d'égalité à plus ou moins 10%, de préférence une relation d'égalité à plus ou moins 5%.

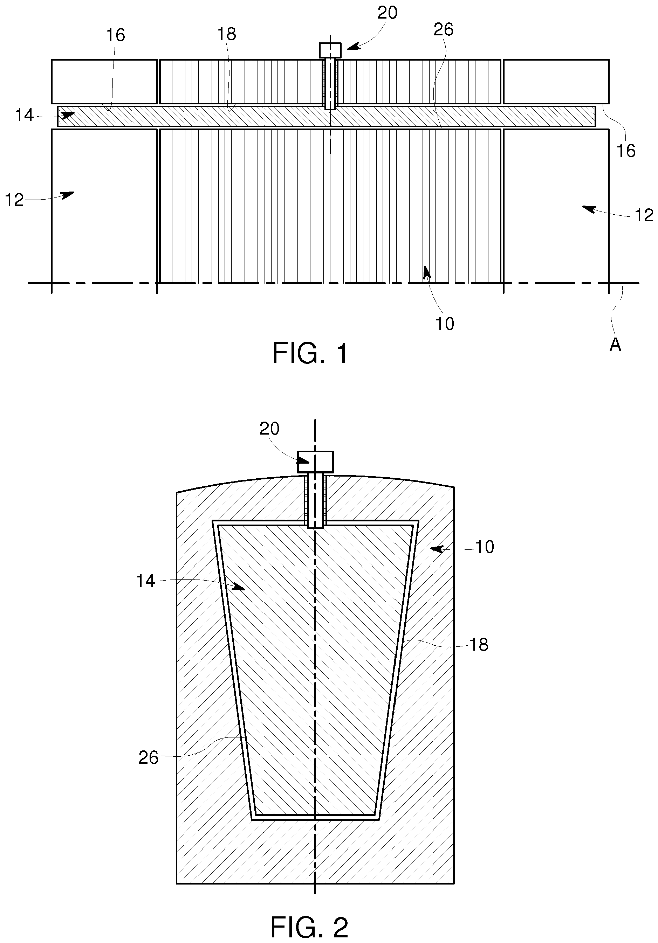

La figure 1 montre une demi-coupe longitudinale d'un rotor selon un premier mode de réalisation, ainsi que son axe A de rotation.

Le rotor ainsi représenté est adapté à coopérer avec un stator et des arbres (non représentés sur la figure 1).

Le rotor comporte une masse magnétique 10 enserrée de part et d'autre par des couronnes de court-circuit 12.

La masse magnétique 10 résulte de l'assemblage de tôles magnétiques dont la réalisation, en particulier les moyens de serrage desdites tôles entre elles, est décrite notamment dans le document de brevet US 5,512,792.

Le rotor comporte une pluralité de conducteurs électriques aptes à conduire, au travers de la masse magnétique 10, des courants électriques appliqués au rotor par les couronnes de court-circuit 12.

Chaque conducteur électrique est constitué d'une unique barre 14.

De préférence, la section de chaque barre 14 est constante ou sensiblement constante sur la totalité de sa longueur.

La section de chaque barre est de forme trapézoïdale. Plus précisément, la section de chaque barre 14 est un trapèze isocèle présentant une petite base et une grande base.

Les barres 14 sont venues de matière. Elles sont réalisées en cuivre ou alliage de cuivre.

Les couronnes de court-circuit 12 ainsi que les barres 14 forment la cage d'écureuil du rotor.

Les extrémités longitudinales de chaque barre 14 sont librement disposées dans des orifices 16 ménagés à la périphérie des couronnes de court-circuit 12.

Chaque orifice 16 a une section dont la forme est complémentaire de celle de la section de la barre 14 qu'il accueille, mais avec des dimensions intérieures légèrement supérieures de manière à ce qu'il existe un jeu de tolérance. Celui-ci permet notamment la libre dilatation de l'extrémité de la barre 14 dans l'orifice 16. Les orifices 16 peuvent être réalisés par fraisage ou brochage de la couronne de court-circuit 12.

Pour traverser la masse magnétique 10, chaque barre 14 est reçue à l'intérieur d'une encoche 18 ménagée dans la masse magnétique.

Chaque encoche 18 a une section dont la forme est complémentaire de celle de la section de la barre 14 qu'il accueille, mais avec des dimensions intérieures légèrement supérieures de manière à ce qu'il existe un jeu de tolérance. Ce jeu de tolérance, référencé par le chiffre 26 sur la figure 2, assure la libre dilatation de la barre 14 dans l'encoche 18 de la masse magnétique 10.

Les barres 14 sont fixées à la masse magnétique 10 en un seul point à l'aide de tout moyen de fixation 20 adéquat, comme par exemple une vis, une goupille ou par n'importe quel dispositif, procédé et accessoire de fixation, permettant ainsi une répartition équilibrée de la dilatation thermique longitudinale pour des déplacements relatifs sensiblement égaux entre les extrémités de la barre 14 et les couronnes de court-circuit 12.

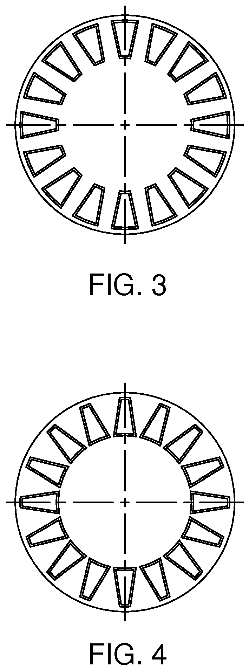

Comme illustré sur la figure 3, dans un premier mode de réalisation, chaque barre 14 est disposée de sorte que sa grande base soit orientée radialement vers l'extérieur par rapport à l'axe A de rotation du rotor. Les encoches 18 et les orifices 16 présentent une forme trapézoïdale adaptée.

Ainsi lorsque le rotor est en rotation, c'est la grande base de la barre 14 qui, sous l'effet de la force centrifuge, accentue son appui sur l'encoche 18 et les orifices 16.

De manière particulièrement avantageuse, les dimensions transversales de la barre 14 sont choisies pour que la distance entre une face d'une barre et la face située en vis-à-vis de la barre voisine, soit sensiblement constante. Dit autrement, une face d'une barre et la face située en vis-à-vis de la barre voisine sont parallèles entre elles, ce qui permet d'augmenter la section des barres 14 pour une même masse magnétique 10, donc de permettre une augmentation de puissance du moteur ayant un tel rotor.

La figure 4 montre un second mode de réalisation dans lequel chaque barre 14 est disposée de sorte que sa petite base soit orientée radialement vers l'extérieur par rapport à l'axe A de rotation du rotor. Les encoches 18 et les orifices 16 présentent une forme trapézoïdale adaptée.

Cependant, dans le deuxième mode de réalisation, la surface d'appui de la barre 14 sur l'encoche 18 étant plus réduite que dans le premier mode de réalisation, les efforts aux points de contacts sont plus importants et risquent de réduire la durée de vie de la masse magnétique.

De plus, la distance entre deux barres successives n'étant pas sensiblement constante, des effets magnétiques non voulus et difficiles à contrôler sont générés, comme une saturation des lignes de flux magnétique et une induction excessive dans les tôles magnétiques de la masse magnétique 10, notamment au niveau de la grande base.

Ainsi lorsque le rotor est en rotation, c'est la petite base de la barre 14 qui, sous l'effet de la force centrifuge, accentue son appui sur l'encoche 18 et les orifices 16. En variante, les quatre coins de la section trapézoïdale sont pourvus d'un arrondi, de valeur sensiblement égale pour les coins de la grande base et d'une autre valeur sensiblement égale pour les coins de la petite base. Ceci permet de réduire les concentrations de contrainte mécanique dans les tôles magnétiques de la masse magnétique 10 et dans les couronnes de court-circuit 12. Cela permet ainsi de réduire le risque de saturation magnétique dans les tôles de la masse magnétique 10 au pourtour des barres 14. Typiquement au moins la grande base, respectivement la petite base, de la barre 14 a deux coins arrondis dont le rayon de l'arrondi est compris entre 10% et 50% de la longueur respectivement de la grande base et de la petite base. Le choix de la valeur du rayon de l'arrondi est un compromis entre la réduction des contraintes mécaniques par exemple dans les tôles de la masse magnétique 10 et la réduction de la section des barres 14 utile pour le passage du courant électrique.

L'invention est particulièrement adaptée aux moteurs de forte puissance évoluant à de grandes vitesses de rotation, typiquement à des vitesses périphériques à partir de 100 m.s⁻¹. Ce type de moteur est généralement contrôlé par des variateurs de fréquence. Le démarrage du moteur ne nécessite qu'un faible courant électrique en raison des applications auxquelles sont destinés ces types de moteurs, à savoir leur utilisation dans des compresseurs ou des pompes.

Dans ce cas, une légère pression de la barre 14 dans l'orifice 16 suffit à permettre le passage d'un faible courant. Par ailleurs, pour les mêmes raisons, la section de la barre 14 assure à elle seule le passage du faible courant électrique au démarrage. Lorsque le moteur accroît sa vitesse, la force centrifuge devenant de plus en plus importante, cette dernière déforme la barre 14, qui va alors exercer une pression sur la face interne de l'orifice 16 dans les couronnes de court-circuit 12 et ainsi engendrer un contact plus important permettant un passage de courant électrique plus important dans les barres 14 et des barres 14 vers les couronnes de court-circuit 12.

L'homme du métier comprendra l'intérêt d'avoir des barres 14 fabriquées d'un seul tenant, et notamment d'une seule pièce à section de forme trapézoïdale, permettant d'accroître la section des barres 14 sur toute leur longueur y compris dans les orifices 16 des couronnes de court-circuit 12. Ceci permet d'augmenter à taille donnée la puissance d'un moteur électrique ayant un tel rotor, sans les inconvénients de balourd thermique suite à des dilatations thermiques différentielles dans des barres constituées d'au moins deux parties, ou d'étincelage entre les parties constituant la barre de section sensiblement trapézoïdale si elles ne sont pas au même potentiel électrique. Les techniques de passage de courant entre barres et couronnes de court-circuit ayant évolué, on peut comprendre l'avantage d'avoir aussi une section de forme sensiblement trapézoïdale dans les extrémités des barres 14 par un passage de courant électrique plus important dans les couronnes de court-circuit 12, augmentant par la même la puissance électrique d'un tel rotor.

## Revendications

1. Rotor pour moteur électrique comportant, suivant l'axe du rotor (A), une masse magnétique (10), enserrée de part et d'autre par des couronnes de court-circuit (12), et traversée au niveau d'une pluralité d'encoches (18) par des conducteurs électriques reliant les couronnes de court-circuit (12) pour former une cage d'écureuil, chaque conducteur électrique est constitué d'une unique barre (14) possédant, sur la totalité de sa longueur, une section trapézoïdale formant un trapèze isocèle, la petite base de chaque barre (14) étant disposée radialement vers l'extérieur par rapport à l'axe du rotor (A), **caractérisé en ce que** les quatre coins de la section trapézoïdale sont pourvus d'un arrondi, de valeur sensiblement égale pour les coins de la grande base et d'une autre valeur sensiblement égale pour les coins de la petite base, le rayon des arrondis de la grande base et le rayon des arrondis de la petite base étant compris entre 10% et 50% de la longueur respectivement de la grande base et de la petite base.

2. Rotor selon la revendication précédente, dans lequel chaque barre (14) est venue de matière et est réalisée en cuivre ou en un alliage de cuivre.

3. Rotor selon l'une quelconque des revendications précédentes, dans lequel la section de chaque barre est sensiblement constante selon l'axe du rotor (A).

4. Moteur apte à entraîner le rotor selon l'une quelconque des revendications précédentes à une vitesse périphérique supérieure ou égale à 100 m.s-1 au niveau du diamètre extérieur de la masse magnétique (10).

5. Utilisation du rotor selon l'une quelconque des revendications précédentes, dans un moteur apte à entraîner ledit rotor à une vitesse périphérique supérieure ou égale à 100 m.s-1 au niveau du diamètre extérieur de la masse magnétique (10).

## Patentansprüche

1. Rotor für einen Elektromotor, der Rotorachse (A) entlang enthaltend: eine magnetische Masse (10), die beidseitig durch Kurzschlusskränze (12) eingespannt ist, und im Bereich von einer Vielzahl von Kerben (18) von elektrischen Leitern durchquert wird, die die Kurzschlusskränze (12) verbinden, um einen Käfigläufer zu bilden, wobei jeder elektrische Leiter aus einem einzigen Stab (14) besteht, der, über seine gesamte Länge, einen trapezförmigen Querschnitt aufweist, der ein gleichschenkliges Trapez bildet, wobei die kleine Basis jeder Stabes (14) radial zur Rotorachse (A) nach außen angeordnet ist, **dadurch gekennzeichnet, dass** die vier Ecken des trapezförmigen Querschnitts mit einer Rundung versehen sind, die für die Ecken der großen Basis im Wesentlichen gleich sind und für die Ecken der kleinen Basis einen anderen Wert haben, der im Wesentlichen gleich ist, wobei der Radius der Rundungen der großen Basis und der Radius der Rundungen der kleinen Basis zwischen 10 % und 50 % der Länge der großen Basis beziehungsweise der kleinen Basis liegt.

2. Rotor nach dem vorhergehenden Anspruch, wobei jeder Stab (14) aus einem einzigen Stück besteht, und in Kupfer oder einer Kupferlegierung ausgeführt ist.

3. Rotor nach einem der vorhergehenden Ansprüche, wobei der Querschnitt jedes Stabes im Wesentlichen konstant entlang der Rotorachse (A) ist.

4. Motor, der geeignet ist, den Rotor anzutreiben, nach einem der vorhergehenden Ansprüche, mit einer Umfangsgeschwindigkeit größer oder gleich 100 m.s-1 im Bereich des Außendurchmessers der magnetischen Masse (10).

5. Verwendung des Rotors, nach einem der vorhergehenden Ansprüche, in einem Motor, der geeignet ist, den Rotor mit einer Umfangsgeschwindigkeit größer oder gleich 100 m.s-1 im Bereich des Außendurchmessers der magnetischen Masse (10) anzutreiben.

## Claims

1. Rotor for electric motor including, on the rotor axis (A), a magnetic mass (10), gripped on either side by short-circuit rings (12), and having electrical conductors passing through it in a plurality of recesses (18), connecting the short-circuit rings (12) to form a squirrel cage, each electrical conductor consisting of a single bar (14) having, over the whole of the length thereof, a trapezoidal cross-section forming an isosceles trapezium, the small base of each bar (14) being disposed radially towards the outside with respect to the axis of the rotor (A), **characterised in that** the four corners of the trapezoidal cross section are provided with a round-off with a substantially equal value for the corners of the large base and another substantially equal value for the corners of the small base, the radius of the round-offs of the large base and the radius of the round-offs of the small base lying between 10% and 50% of the length respectively of the large base and of the small base.

2. Rotor according to the preceding claim, wherein each bar (14) is made in one piece and is produced from copper or from a copper alloy.

3. Rotor according to either one of the preceding claims, wherein the cross section of each bar is substantially constant along the axis of the rotor (A).

4. Motor able to drive the rotor according to any one of the preceding claims at a peripheral speed greater than or equal to 100 m.s-1 at the outside diameter of the magnetic mass (10).

5. Use of the rotor according to any one of the preceding claims, in a motor able to drive said rotor at a peripheral speed greater than or equal to 100 m.s-1 at the outside diameter of the magnetic mass (10).
